(19) Europäisches Patentamt
European Patent Office
Office européen des brevets

(11) EP 2 960 273 A1

(12) EUROPEAN PATENT APPLICATION

(43) Date of publication:
**30.12.2015 Bulletin 2015/53**

(21) Application number: **14173533.2**

(22) Date of filing: **23.06.2014**

(51) Int Cl.:
***C08K 3/00*** (2006.01) ***C08K 3/04*** (2006.01)
***C08L 77/06*** (2006.01) ***C08L 77/10*** (2006.01)
***C08F 2/44*** (2006.01) ***C01B 31/02*** (2006.01)
***C01B 31/04*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Solvay SA**
**1120 Bruxelles (BE)**

(72) Inventor: **BOBENRIETH, Alexis**
**7000 Mons (BE)**

(74) Representative: **Vande Gucht, Anne et al**
**Solvay S.A.**
**Intellectual Assets Management**
**Rue de Ransbeek, 310**
**1120 Bruxelles (BE)**

# (54) Process for preparing graphene material-semi aromatic polyamides nanocomposites

(57) The present invention relates to a process for manufacturing a nanocomposite comprising at least one semi-aromatic polyamide and at least one graphene material, said process comprising at least the steps consisting in:
(i) having in a reactor said graphene material and a monomer material suitable for the preparation of said semi-aromatic polyamide, and
(ii) polymerizing said monomer material in said reactor to yield said nanocomposite.

The present invention further relates to a nanocomposite and a Masterbatch obtainable by said process.

**Figure 2**

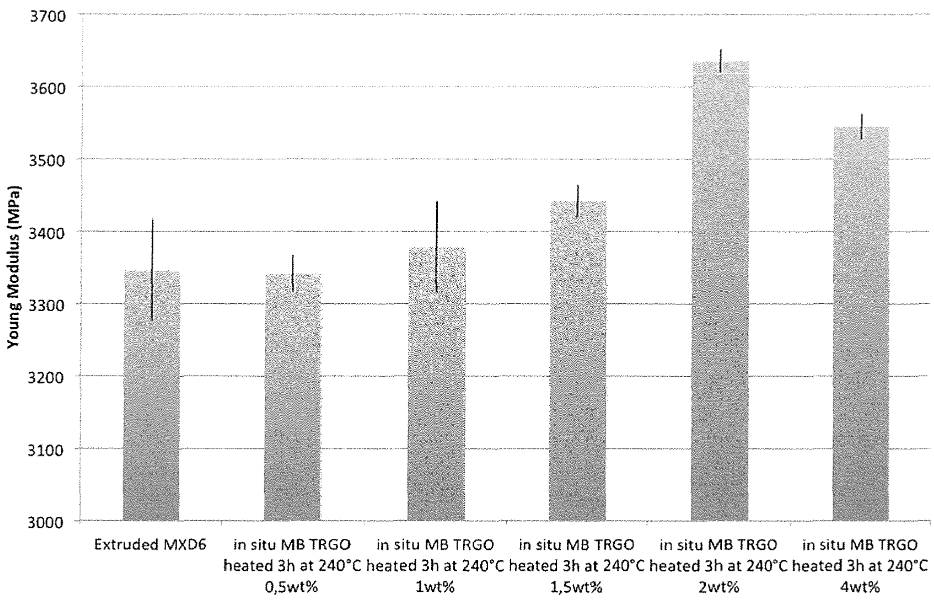


EP 2 960 273 A1

## Description

The present invention generally relates to the field of semi-aromatic polyamides nanoparticle-filled polymer composites, more particularly to a process for producing graphene filled semi-aromatic polyamides nanocomposites having improved useful properties.

Semi-aromatic polyamides (like those derived from aromatic diamines and aliphatic diacids) are polymers having excellent mechanical, physical and chemical properties which make them useful for a variety of applications.

High performance polyarylamides commercialized under the trade name IXEF® by Solvay Advanced Polymers, L.L.C. are also proposed for the manufacture of products for healthcare, like medical devices.

These semi-aromatic polyamides are highly rigid polymers displaying high modulus and strength but show an unsatisfactory crystallization behavior, which in many cases requires oil-heated moulds to achieve satisfactory cycle times in thermoplastic processing. Furthermore, molding compositions comprising such semi-aromatic polyamides show a tendency to flash during injection molding. The problem of unsatisfactory crystallization behavior has been partly solved through the inclusion of significant amounts of nucleating agents such as e.g. talc or polyamide-6,6 but the processability overall is still not fully satisfactory.

Polyarylamides also show a relatively high brittleness and low toughness which limits or even excludes their use in certain applications for which such polyarylamides would be ideal in view of their other properties.

There has been a great interest in the last years to develop nanoparticle-filled semi-aromatic polyamides for getting better mechanical, thermal and/or conductive properties thereof.

WO2011/117325 relates to a composition based on semi-aromatic polyamides and graphene material having improved processing properties. This document takes benefit of the nucleating effect of graphitic materials, in particular nano-graphene platelets (NGPs), by dispersing this type of fillers *via* melt extrusion. However, even if the dispersion ofNGP *via* melt extrusion improves tensile mechanical behavior of the polymer, there remains a need to obtain even better properties of semi-aromatic polyamides, in particular *via* a better dispersion of the filler.

Some approaches have also been described in the past for preparing polymer-graphene oxide nanocomposites where *in situ* polymerization of specific monomer(s) may take place in presence of graphene oxide: Dan Zheng et al., "In situ thermal reduction of graphene oxide for high electrical conductivity and low percolation threshold in polyamide 6 nanocomposites", Composites Science and Technology 72 (2012) 284-289, where polyamide 6 (PA 6) nanocomposites are obtained with improved electrical properties and Xiaoqing Zhang et al, "Facile preparation route for graphene oxide reinforced polyamide 6 composites via in situ anionic ring-opening polymerization", J. Mater. Chem., 2012, 22, 24081 where tensile behavior was proved to be improved.

The inventors have demonstrated that for similar compositions as the one described in WO2011/117325, it is possible to enhance the product properties by another process comprising an *in situ* polymerization, eventually combined with the Masterbatch (MB) approach as detailed hereinafter. The enhancement of the nanocomposite polymer properties (thermal and electrical conductivity, Young modulus, fuel and gas barrier, processability due to improved crystallinity and viscosity) is reached thanks to an improvement of the filler dispersion compared to extrusion. In particular it may be stated that the filler dispersion is improved in the polymer matrix at the nanoscale compared to conventional composites.

Specifically, the present invention relates to a process for manufacturing a nanocomposite comprising at least one semi-aromatic polyamide and at least one graphene material, said process comprising at least the steps consisting in:

(i) having in a reactor said graphene material and a monomer material suitable for the preparation of said semi-aromatic polyamide, and
(ii) polymerizing said monomer material in said reactor to yield said nanocomposite.

According to another of its aspects, a subject of the invention is also directed to a nanocomposite obtainable by the process according to anyone of the preceding claims, in particular a nanocomposite wherein the graphene material is a thermally reduced graphene oxide, wherein the graphene material is present in the nanocomposite in an amount of less than 3% by weight, in particular of less than 2.5% by weight and more particularly equal or less than 2% by weight, with respect to the total weigh of the nanocomposite, and wherein in particular the nanocomposite has a Young modulus, as measured according ASTM D638, which is at least 5% greater, generally around 10% greater, than a reference nanocomposite obtained by extruding the semi-aromatic polyamide and the graphene material.

It further relates to a Masterbatch obtainable by the process according to the present invention, wherein the graphene material is present in the Masterbacth in an amount above 3% by weight, in particular ranging from 3 to 5% by weight, in particular from 5 to 10% by weight, for example from 10 to 20% by weight, with respect to the total weight of the Masterbatch.

Within the framework of the present invention, the term "filler" as used herein means the graphene material.

**PROCESS FOR PRODUCING SEMI-AROMATIC POLYAMIDE NANOCOMPOSITES**

The steps (i) and (ii) of the process according to the present invention are described hereinafter. The step (ii) is performed in a reactor, which can be an autoclave reactor.The step (i) can, in some cases, be performed in the same reactor as step (ii). Alternatively, when polymerization is melt polymerization, the mixture of graphene material and the monomer suitable for the preparation of the semi-aromatic polyamide may be prepared outside the reactor as far as a drying step is needed.

Said steps are preferably successive steps. This does not exclude that additional steps may be present intercalated between said steps (i) and (ii), before step (i) or after step (ii).

According to a particular embodiment of the present invention, the graphene material and the monomer material are mixed prior to the polymerization step (ii).

Indeed, the general aim of the present process within the framework of said embodiment is to produce a good dispersion of the graphene material in the monomer material mixture before the polymerization in order to improve the graphene material dispersion within the polymer, more specifically at the nanoscale.

For the purpose of the present invention, the term "monomer material" means the reaction medium comprising the monomers and optionally any other additional filler, prior to the polymerization step. One may cite carbon nanotubes as additional filler. Other ingredients than fillers may also be added, such as end-chain agent, plasticizers or polymerization catalysts. However, they should not be present in amounts that would negatively impact the improved properties as awaited in the framework of the present invention.

The monomer material advantageously comprises at least one diacid (or a derivative thereof) and at least one diamine.

(i) Step of having in a reactor graphene material and a monomer material suitable for the preparation of said semi-aromatic polyamide and graphene material

According to a first embodiment of the present invention, the reactor further comprises a solvent of the monomer material, said solvent and said monomer material forming a solution, and said graphene material being dispersed in said solution.

In one aspect of said first embodiment, the monomer material is added in the reactor containing a dispersion of graphene material in the solvent of the monomer material. In other words, in this particular case, the monomer material is added after a dispersion step of the graphene material alone in a solvent of said monomer material.

The graphene or graphene dispersion (in the solvent) may alternatively be added into the solution, i.e. in the opposite order.

When the graphene material is dispersed before the introduction of the monomer material, the graphene material may be dispersed in the solvent of the monomer material with a mixing tool for improving the dispersion quality. Among mixing tools, the following may be cited: magnetic stirring, ultraturrax, ultrasonication bath, ultrasonicator or high pressure homogenizer.

Said dispersion step generally occurs before the introduction of said dispersion into the reactor unless the reactor is itself equipped with a mixing tool, such as a mechanical stirring.

Energetic or high energetic mixing tools like ultrasonicator or high pressure homogenizer are preferred.

The duration of the dispersion step of the graphene material depends on the system, in particular depends on the particles specificities (size, initial agglomeration, surface funtionnalities...), the solvent, the mixing tool. Typically the dispersion step may last from 5 minutes to 6 hours, for example from 1 to 4 hours.

The solvent of the monomer material may be water or an organic solvent. Among organic solvent, the following may be cited dimethylsulfoxide (DMSO), N,N-Dimethylacetamide (DMAc), Dimethylformamide (DMF), N-Methyl-2-pyrrolydone (NMP), chloroform, acetone, cyclohexanone.

As it will be explained herein after said solvent can be thereafter evaporated, before the polymerization step.

Sometimes, the reduction of the graphene material, in the form of a graphene/graphite oxide (GO) is required. Among other reduction well known methods, this reduction step can occur chemically as the GO is dispersed in a solution or thermally as the GO is in the form of a powder.

Typically, such a reduction step may be carried out from graphene oxide (GO) *via* thermal treatment to obtain thermally reduced graphene oxide (TRGO) or *via* chemical action to obtain chemically reduced graphene oxide (CRGO), according to methods well known to the man skilled in the art.

A chemical reduction step of GO may be implemented, simultaneously or after a dispersion step of GO in the solvent, which may be implemented outside the reactor, or inside, for example according to the dispersion step as described above.

Alternatively, as it is illustrated in the examples, the thermal reduction step may be implemented in the reactor after introduction of the GO, into the reactor, free of solvent. Said one pot synthesis is particularly preferred even though

the thermal reduction step may also be implemented outside the reactor, for example in an oven.

The GO may in particular be heated at a temperature greater than 200°C in order to produce thermally reduced graphene (TRGO). The reduction temperature may for example vary from 200 to 400°C, in particular from 200 to 350°C, and more particularly from 200°C to 300°C.

The heating duration depends on the temperature. The duration of said heating may range from 2 to 8 hours, for example from 2 to 5 hours.

As a general rule the higher the temperature, the shorter the treatment is.

Chemical reduction may alternatively be carried out by introduction of a reducing agent, which may for example be selected from hydrazine, Vitamin C, $NaBH_4$, sodium sulfite, sodium thiosulfite, sodium formaldehyde sulfoxylate, ascorbic acid, hydriodic acid in combination with trifluoro acetic acid and thiourea dioxide.

Said chemical reduction step may additionally necessitate heating, for example at a temperature equal or less than 100°C. Said temperature may in particular range from 80 to 100°C, more particularly from 90 to 100°C, for example at 100°C.

The duration of said heating may range from 6 to 24 hours, for example from 12 to 24 hours, for example from 15 to 19 hours. According to these method, when GO is reduced in solution, the resulting CRGO may be recovered after drying from its dispersion solution.

According to a second embodiment, the reactor is free of any solvent of the monomer material and the graphene material is dispersed in said monomer material. In said embodiment, the monomer material plays the role of solvent for the graphene material. Contrary to the first embodiment, a dispersion step of graphene material is not desirable before introduction into the reactor.

The monomer material and the graphene material are introduced into the reactor in any order. According to another embodiment, graphene material is first introduced into the reactor and the monomer in second. According to another embodiment, the monomer material and the grahene material are premixed outside the reactor, and introduced therein in a second stage.

The obtained mixture may be maintained under gentle stirring.

This addition step may typically last a few minutes, for example from 2 to 30 min.

This addition step may also comprise any addition of optional additional fillers or other ingredients useful for the polymerization as already mentioned above in connection to the definition of the monomer material.

The monomer material may be introduced in the reactor under the form of a nylon salt, which represents a typical approach in the polyamide synthesis, well known to the man skilled in the art, and as further described beneath.

A "nylon salt" more precisely denotes a crystalline salt made by mixing the dicarboxylic acid and the diamine at room temperature, using an exact 1:1 ratio of the acid and the base to neutralize each other, in particular in the first step of nylon manufacture and by extension of polyamide manufacture. The nylon salt is used in order to have a perfect stoichiometric ratio between the two monomers. This stoichiometric ratio is needed in the polycondensation process to reach high molecular weight.

Following this addition step, the mixture filler-nylon salt may be recovered by salt precipitation, filtration and drying.

(ii) Step of polymerizing said monomer material

According to a first embodiment, the polymerization is a melt polymerization and is in particular performed under inert gas, more particularly under stirring and under heating and optionally under pressure. These parameters depend on the polymer targeted, namely the nature of the polymer and molecular weight thereof It follows that when step (i) occurs with the presence of a solvent of the monomer material or the nylon salt, the process may further comprise a step of evaporating said solvent, prior to the polymerization step.

The polymerization conditions are well known to the man skilled in the art.

In particular, the polymerization may be conducted with various steps of temperature. As illustrated in the example of graphene-MXD6 nanocomposite production via *in situ* polymerization, the temperature may be maintained within a range of 220 to 240°C during 1 to 2 hours, and be increased by 250 °C during 2 to 3 hours.

According to a second embodiment, polymerization may occur in a solvent. The quantities of the different ingredients depend of the targeted filler concentration in the nanocomposite and the volume of the reactor.

The graphene material may be present in the nanocomposite in an amount ranging from 0.01 to 20%, in particular from 0.01 to 10%, and more particularly from 0.5 to 5% by weight, with respect to the total weight of the nanocomposite.

The nanocomposite according to the present invention may be distinguished from a reference nanocomposite obtained by extruding the semi-aromatic polyamide and the graphene material by a Young modulus measurement. Typically, a nanocomposite obtainable by the process according to the present invention may present a Young modulus value, as measured according ASTM D638, which is at least 5% greater, and more generally around 10% greater, than

a reference nanocomposite obtained by extruding the semi-aromatic polyamide and the graphene material.

Percolation threshold

The percolation threshold is the filler content at which a drop of property occurs.

The percolation threshold can be different depending on the property aimed to be improved, such as typically mechanical properties or conductivity. It is closely linked to the quality of the filler dispersion at the nanoscale; the better the dispersion, the lower the percolation threshold.

Typical targeted graphene material content is very low as described above because the *in situ* polymerization leads to an extremely good dispersion at the nanoscale.

However, said values may also not be identical. In the illustrated example, the percolation threshold is almost identical for the Young Modulus and the electrical conductivity, namely 2% by weight with respect to the total weight of the nanocomposite. It is a common knowledge for the man skilled in the art that conductivity increases with the increase of the amount of conductive filler (for example TRGO as illustrated in the example) in the sense of the present invention. However, increasing of the filler amount may present adverse effects in decreasing the mechanical properties, in terms of loss of ductility. A compromise of the filler amount may then be seeked for responding to the targeted properties, depending mainly on the application.

According to a particular embodiment of the present invention, the graphene material amount corresponding to the percolation threshold for mechanical and conductivity properties is less than 3% by weight with respect to the total weight of the nanocomposite or of the Masterbacth.

**MONOMERS SUITABLE FOR THE PREPARATION OF SEMI-AROMATIC POLYAMIDE**

The monomers suitable for preparing of semi-aromatic polyamide may be a mixture of monomers suitable for preparing semi-aromatic polyamides, in particular as described hereinafter.

For the purpose of the present description, the term "semi-aromatic polyamide" should be understood as defining any polymer which comprises recurring units obtainable by (and preferably, obtained by) the polycondensation reaction between at least one non-aromatic diacid (or derivatives thereof) and at least one aromatic diamine, and/or recurring units obtainable by (and preferably, obtained by) the polycondensation reaction between at least one aromatic diacid (or derivatives thereof) and at least one non-aromatic diamine.

A diacid (or derivative thereof) or a diamine is considered for the purpose of this invention as "aromatic" when it comprises one or more than one aromatic group. A diacid (or derivative thereof) or a diamine or an amino-carboxylic acid (or derivative thereof) is considered for the purpose of this invention as "non-aromatic" when it does not contain aromatic groups.

Very preferably, the semi-aromatic polyamide (SA-PA) comprises recurring units obtainable by (and preferably, obtained by) the polycondensation reaction between an aromatic diamine and an aliphatic diacid (or derivatives thereof) and/or recurring units obtainable by (and preferably, obtained by) the polycondensation reaction between an aromatic diacid (or derivatives thereof) and an aliphatic diamine.

A first class of semi-aromatic polyamides comprised in the nanocomposite according to the present invention are semi-aromatic polyamides (SA-PA1) comprising more than 50 mole % of recurring units obtainable by (and preferably, obtained by) the polycondensation reaction between at least one aliphatic diacid or derivative thereof and at least one aromatic diamine ; preferably more than 75 mole % and more preferably more than 85 mole % of said recurring units can be obtained (and preferably, are obtained) by the polycondensation reaction between at least one aliphatic diacid or derivative thereof and at least one aromatic diamine. Still more preferably, essentially all or even all the recurring units of the semi-aromatic polyamides (SA-PA1) can be obtained (and preferably, are obtained) by the polycondensation reaction between at least one aliphatic diacid or derivative thereof and at least one aromatic diamine.

The term diacid derivative is intended to encompass any compound, e.g. acid halogenides, especially chlorides, acid anhydrides, acid salts, acid amides and the like, which can be advantageously used in a polycondensation reaction.

The expression "at least one aliphatic diacid or derivative thereof' and "at least one aromatic diamine" are understood to mean that one or more than one aliphatic diacid or derivative thereof and one or more than one aromatic diamine can be made to react as above specified. The aromatic diamine is preferably a $C_6$-$C_{24}$-aromatic diamine, more preferably a $C_6$-$C_{18}$-aromatic diamine, still more preferably a $C_6$-$C_{10}$-diamine such as m-xylylenediamine (MXDA). The aromaticity of the aromatic diamine results preferably from the presence therein of m-phenylene and/or o-phenylene groups, in a total amount ranging generally from 1 to 2.

Non limitative examples of **aromatic diamines** are m-phenylene diamine (MPD), p-phenylene diamine (PPD), 3,4'-diaminodiphenyl ether (3,4'-ODA), 4,4'-diaminodiphenyl ether (4,4'-ODA), m-xylylenediamine (MXDA), as shown below :

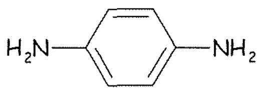

(PPD)

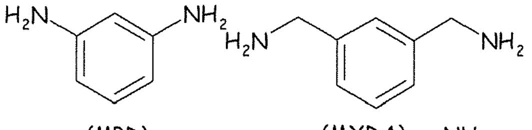

(MPD) (MXDA)

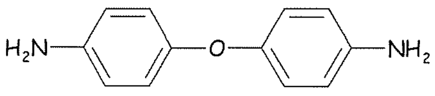

(4,4'-ODA)

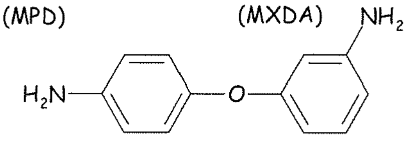

(3,4'-ODA)

and *p*-xylylenediamine (PXDA, not represented).

A particularly preferred aromatic diamine is *m*-xylylene diamine (MXDA).

The aliphatic diacid is preferably a $C_2$-$C_{16}$-aliphatic diacid, more preferably a $C_4$-$C_{12}$-aliphatic diacid, still more preferably a $C_6$-$C_{10}$-aliphatic diacid such as adipic acid or sebacic acid. The aliphatic diacid is preferably linear.

Non limitative examples of aliphatic diacids are oxalic acid (HOOC-COOH), malonic acid (HOOC-$CH_2$-COOH), succinic acid [HOOC-$(CH_2)_2$-COOH], glutaric acid [HOOC-$(CH_2)_3$-COOH], 2,2-dimethyl-glutaric acid [HOOC-$C(CH_3)_2$-$(CH_2)_2$-COOH], adipic acid [HOOC-$(CH_2)_4$-COOH], 2,4,4-trimethyl-adipic acid [HOOC-$CH(CH_3)$-$CH_2$-$C(CH_3)_2$-$CH_2$-COOH], pimelic acid [HOOC-$(CH_2)_5$-COOH], suberic acid [HOOC-$(CH_2)_6$-COOH], azelaic acid [HOOC-$(CH_2)_7$-COOH], sebacic acid [HOOC-$(CH_2)_8$-COOH], undecanedioic acid [HOOC-$(CH_2)_9$-COOH], dodecanedioic acid [HOOC-$(CH_2)_{10}$-COOH] and tetradecanedioic acid [HOOC-$(CH_2)_{12}$-COOH]. **Cycloaliphatic diacids** comprising at least one carbocyclic ring with of from 4 to 8 carbon atoms in the ring, like e.g. cyclohexane dicarboxylic acids may also be used.

A preferred aliphatic diacid is adipic acid or sebacic acid.

According to a preferred embodiment the aromatic diamine is selected from a $C_6$-$C_{24}$-aromatic diamine, more preferably a $C_6$-$C_{18}$-aromatic diamine and more preferably a $C_6$-$C_{10}$-diamine and the aliphatic diacid is selected form a $C_2$-$C_{16}$ aliphatic diacid.

As above mentioned, such aliphatic diacids can be used in the polycondensation reaction preferably in the form of the free acid or the acid chloride.

The molecular weight of the semi-aromatic polyamide comprised in the nanocomposite according to the present invention is not particularly limited. The semi-aromatic polyamide comprised in the nanocomposite according to the present invention has advantageously a number average molecular weight ($M_n$) ranging from 2500 to 60000, in particular from 5000 to 50000, more particularly from 10000 to 30000.

$M_n$ can be calculated according to the following formula:

$$M_n = 2x10^6 / \Sigma \text{ (-COOH end groups) + (-NH}_2\text{ end groups)}$$

(-COOH end groups) = number of acid end groups in µequivalents/gram of product resin (titrated with a base)
(-$NH_2$ end groups) = number of basic end groups in µequivalents/gram of product resin (titrated with an acid).

For the purpose of the present invention, it should be understood that the definition "semi-aromatic polyamides (SA-PA1)" also encompasses polyamides comprising less than 50 mole %, preferably less than 25 mole % and more preferably less than 15 mole % of recurring units obtainable by (and preferably, obtained by) the polycondensation reaction between at least one aliphatic diacid or derivative thereof, as above specified, and at least one aliphatic diamine. In this particular embodiment, said at least one aliphatic diamine may be a comonomer used in conjunction with one of the aromatic diamines as specified above. Said aliphatic diamine may be selected, for instance, among 1,2-diaminoethane, 1,2-diaminopropane, propylene-1,3-diamine, 1,3-diaminobutane, 1,4-diaminobutane, 1,5-diaminopentane, 1,6-hexanediamine or hexamethylenediamine (HMDA), 1,8-diaminooctane, 1,10-diaminodecane, 1,12-diaminododecane or 1-amino-3-*N*-methyl-*N*-(3-aminopropyl)-aminopropane.

A preferred aliphatic diamine in this regard is 1,6-diaminohexane (hexamethylenediamine (HMDA)).

Cycloaliphatic diamines comprising at least one carbocyclic ring having of from 4 to 8 carbon atoms in the ring, like e.g. 1,3-bis(aminomethyl)cyclohexane, bis-(4- aminocyclohexyl)methane or bis(3-methyl-4-aminocyclohexyl)methane are also suitable.

Another class of semi-aromatic polyamides (SA-PA) comprised in the nanocomposite according to the present invention are semi-aromatic polyamides (SA-PA2) comprising more than 50 mole % of recurring units obtainable by (and preferably, obtained by) the polycondensation reaction between at least one aromatic diacid, or derivative thereof, and at least one aliphatic diamine.

The expression "at least one aromatic diacid or derivative thereof" and "at least one aliphatic diamine" are understood to mean that one or more than one aromatic diacid or derivative thereof and one or more than one aliphatic diamine can be made to react as above specified.

Non limitative examples of aliphatic diamines are 1,2-diaminoethane, 1,2-diaminopropane, propylene-1,3-diamine, 1,3-diaminobutane, 1,4-diaminobutane, 1,5-diaminopentane, 1,6-hexanediamine or hexamethylenediamine (HMDA), 1,8-diaminooctane, 1,10-diaminodecane, 1,12-diaminododecane, 1-amino-3-*N*-methyl-*N*-(3-aminopropyl)-aminopropane, 1,3-bis(aminomethyl)cyclohexane, bis-(4- aminocyclohexyl)methane or bis(3-methyl-4-aminocyclohexyl)methane.

A preferred aliphatic diamine in this embodiment is hexamethylenediamine (HMDA).

Aromatic diacids and derivative thereof employed in the polycondensation reaction to yield the semi-aromatic polyamides (SA-PA2) are not particularly restricted. Non limitative examples of aromatic diacids are e.g. phthalic acids, including isophthalic acid (IPA), terephthalic acid (TPA) and orthophthalic acid (also referred to simply as phthalic acid or PA hereinafter), naphthalenedicarboxylic acids, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, and bis(3-carboxyphenoxy)benzene.

Preferably, the semi-aromatic polyamides (SA-PA2) comprised in the nanocomposite according to the present invention are polyphthalamides, i.e. aromatic polyamides of which more than 50 mole % of the recurring units are obtainable by (and preferably, obtained by) the polycondensation reaction between at least one phthalic acid, chosen preferably among IPA, TPA and PA, or derivative thereof, and at least one aliphatic diamine.

For the avoidance of doubt, the chemical structures of IPA, TPA, PA are depicted herein below:

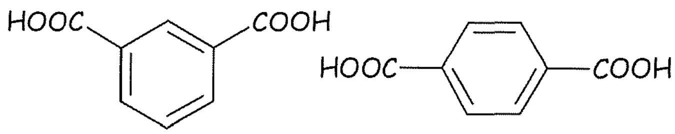

(IPA) (TPA)

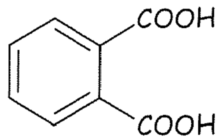

(PA)

The semi-aromatic polyamides (SA-PA2) may also be chosen from poly(tere/iso)phthalamides.

For the purpose of the present invention, poly(tere/iso)phthalamides are defined as aromatic polyamides of which:

(i) more than 50 mole % of the recurring units are formed by the polycondensation reaction between a mixture of terephthalic acid and isophthalic acid, and at least one aliphatic diamine ;
(ii) more than 25 and up to 50 mole % of the recurring units are formed by the polycondensation reaction between terephthalic acid and at least one aliphatic diamine; and
(iii) from 1 to 25 mole % of the recurring units are formed by the polycondensation reaction between isophthalic acid and at least one aliphatic diamine.

Poly(tere/iso)phthalamides may further comprise recurring units formed by the polycondensation reaction between at least one aliphatic diacid and at least one aliphatic diamine. In addition, poly(tere/iso)phthalamides are preferably free of recurring units formed by the polycondensation reaction between (ortho)phthalic acid (PA) and at least one diamine (aliphatic or aromatic).

The semi-aromatic polyamide (SA-PA2) may also be chosen from polyterephthalamides or polyisophthalamides.

For the purpose of the present invention, polyterephthalamides respectively polyisophthalamides are defined as aromatic polyamides of which more than 50 mole % of the recurring units are formed by the polycondensation reaction between terephthalic respectively isophthalic acid and at least one aliphatic diamine.

A first class of polyterephthalamides respectively polyisophthalamides consists of respective polyamides essentially all, if not all, the recurring units of which are formed by the polycondensation reaction between terephthalic acid respectively isophthalic acid and at least one aliphatic diamine [class (I)].

A second class of polyterephthalamides respectively polyisophthalamides consists of respective polyamides essentially all, if not all, the recurring units of which are formed by the polycondensation reaction between mixtures of terephthalic acid and isophthalic acid and at least one aliphatic diamine [class (II)]. The molar ratio of terephthalic acid to isophthalic acid is not subject to particular restrictions and may be generally in the range of from 85:15 to 15:85, preferably in the range of from 70:30 to 30:70.

A third class of polyterephthalamides respectively polyisophthalamides consists of respective polyamides essentially all, if not all, the recurring units of which are formed by the polycondensation reaction between mixtures of terephthalic acid respectively isophthalic acid and at least one aliphatic diacid, and at least one aliphatic diamine [class (III)]. Such recurring units are respectively referred to as terephthalamide respectively isophthalamide and aliphatic acid-amide recurring units. Within class (III), a subclass consists of polyterephthalamides respectively polyisophthalamides in which the mole ratio of the terephthalamide respectively isophthalamide recurring units based on the total number of moles of the recurring units (i.e. the terephthalamide respectively isophthalamide plus the aliphatic acid-amide recurring units) is 60 mole % or more; in addition, it is advantageously 80 mole % or less, and preferably 70 mole % or less [subclass (III-1)].

Within class (III), a second subclass consists ofpolyterephthalamides respectively polyisophthalamides in which the mole ratio of the terephthalamide respectively isophthalamide recurring units based on the total number of moles of the recurring units (i.e. the terephthalamide respectively isophthalamide plus the aliphatic acid-amide recurring units) is less than 60 mole % [subclass (III-2)]. A fourth class of polyterephthalamides respectively polyisophthalamides consists of respective polyamides essentially all, if not all, the recurring units of which are formed by the polycondensation reaction between terephthalic acid, isophthalic acid, at least one aliphatic diacid and at least one aliphatic diamine [class (IV)].

Aliphatic acids and aliphatic amines useful for classes (I) to (IV) are those above described as suitable for polymers SA-PA1 and SA-PA2.

Among all semi-aromatic polyamides (SA-PA) described here above, semi-aromatic polyamides (SA-PA1) are often preferred as components of the nanocomposite in accordance with the instant invention. MXD6 and MXD10 polymers are especially preferred as the semi-aromatic polyamide (SA-PA) comprised in the nanocomposite according to the present invention.

For the purpose of the present invention, a MXD6 polymer is intended to denote a semi-aromatic polyamide essentially all, if not all, the recurring units of which are obtainable by (and preferably, obtained by) the polycondensation reaction of adipic acid with meta-xylylene diamine.

For the purpose of the present invention, a MXD10 polymer is intended to denote a semi-aromatic polyamide essentially all, if not all, the recurring units of which are obtainable by (and preferably, obtained by) the polycondensation reaction of sebacic acid with meta-xylylene diamine.

**GRAPHENE** MATERIAL

Graphene itself is usually considered as a one-atom thick planar sheet of sp2-bonded carbon atoms that are densely packed in a honeycomb structure. The name graphene is derived from graphite and the suffix -ene. Graphite itself consists of a high number of graphene sheets stacked together.

Graphite, carbon nanotubes, fullerenes and graphene in the sense referred to above share the same basic structural arrangement of their constituent atoms. Each structure begins with six carbon atoms, tightly bound together chemically in the shape of a regular hexagon - an aromatic structure similar to what is generally referred to as benzene.

Perfect graphenes consist exclusively of hexagonal cells; pentagonal and heptagonal cells constitute defects in the structure. If an isolated pentagonal cell is present, the plane warps into a cone shape and the insertion of 12 pentagons would create a fullerene.

At the next level of organization is graphene itself, a large assembly of benzene rings in a basically planar sheet of hexagons that resembles chicken wire. The other graphitic forms are built up out of graphene. Buckyballs and the many other non tubular fullerenes can be thought of as graphene sheets wrapped up into atomic-scale spheres, elongated spheroids and the like. Carbon nanotubes are essentially graphene sheets rolled into minute cylinders. And finally, graphite is a thick, three-dimensional stack of graphene sheets; the sheets are held together by weak, attractive intermolecular forces (van der Waals forces). The feeble coupling between graphite sheets enables graphite to be broken up into miniscule wafers.

In the chemical literature graphene was defined officially in 1994 by the IUPAC (Boehm et al., Pure an Appl. Chemistry 66, 1893-1901 (1994)) as follows.

A single carbon layer of the graphitic structure can be considered as the final member of the series naphthalene, anthracene, coronene, etc. and the term graphene should therefore be used to designate the individual carbon layers in graphite intercalation compounds.

According to the IUPAC compendium on technology, the term graphene should only be used when the reactions, structural relations or other properties of individual layers are discussed, but not for three-dimensional structures.

In the literature graphene has also been commonly referred to as monolayer graphite.

One way to obtain graphene is to exfoliate it, i.e. to peel it off from graphite with an adhesive tape repeatedly. Graphene produced this way is, however, extremely expensive.

Another method is to heat silicon carbide to temperatures above 1100°C to reduce it to graphene. This process produces a sample size that is dependent upon the size of the SiC substrate used. However, again products obtained

by this process are still very expensive.

Experimental methods have been reported for the production of graphene ribbons consisting of cutting open carbon nanotubes (Nature 2009, 367). Depending on the substrate used (single- or multi-walled nanotubes) single graphene sheets or layers of graphene sheets can be obtained. However, due to the fact that carbon nanotubes are very expensive materials, graphene products obtained this way are not commercially feasible as components of polymer compositions.

M. Choucair et al., Nature Nanotechnology 4, 30-33 (2009) disclose a process for producing gram quantities of graphene by the reduction of ethanol by sodium metal, followed by pyrolysis of the ethoxide product and washing with water to remove sodium salts.

Another way of obtaining graphene layers is *via* the oxidation of highly ordered graphite. This oxidation introduces oxygen-bearing functional groups into the graphite layers, which under suitable conditions may be deprotonated to a certain extent (or more or less completely), resulting in an electrostatic repulsion between the resulting negative charges of adjacent layers. After sonication, the graphite layers separate and a graphene oxide solution is obtained which may be put on a substrate and then reduced or may be reduced and then put on a substrate. A suitable process is e.g. described in ACS Nano 2008, 2(3), pages 463 to 470 (Becerril et al., Evaluation of solution processed reduced graphene oxide films as transparent conductors).

As used herein, the term:

- "graphene" relates to a single-atom-thick sheet of hexagonally arranged carbon atoms freely suspended or adhered on a foreign substrate. The lateral dimensions are from hundreds nm to few microns.

- "nano-graphene platelets" (also called "graphite nanoplates", "graphite nanosheets" and "graphite nanoflakes") (NGPs) refer to an isolated single layer graphene sheet (single layer NGP) or to a stack of graphene sheets (multi-layer NGP). Typically, without being limited thereto, graphene nanosheets are stacked on top of each other with a single sheet thickness of 3.37 A. The stacking can be up to 100 nm or even more (multi-layer NGP). The number of single layers in a NGP can be estimated from the stack thickness by dividing same by the thickness of a single graphene layer (which is considered as 0.34 nm). Thus, e.g. a NGP with a stack thickness of 2 nm comprises 6 single graphene layers. The aspect ratio of NGPs can generally cover a very broad range of from 1 to 60000 preferably of from 1 to 25000 and most preferably of from 1.5 to 5000. This aspect ratio applies for nano-graphene platelets in two dimensions and in this respect nano-graphene platelets differ from carbon nanotubes. For instance, the aspect ratio denotes the ratio L/d, wherein L is the lateral dimention and d is the stack thickness.

- "Graphite" is a thick, three-dimensional stack of graphene sheets, having a thickness superior to 100 nm.
- "graphene oxide" (GO) means an oxidized graphene monolayer or few-layer material with a high oxygen content characterized by an oxygen content of less than 50% by weight, in particular close to 20% by weight.
- "reduced graphene oxide" (rGO) means a GO (as previously defined) reductively processed for example by thermal or a chemical treatment, but also by other treatments such as microwave, photo-chemical, photo-thermal or microbial/bacterial. The oxygen content is consequently reduced to a value at most equal to 10%, preferably below 5 and more preferably below 2%.

It is therefore to be understood that within the framework of the present invention, the term "graphene material" in particular excludes graphite as such and also expanded graphite and carbon nanotubes. Moreover, the term "graphene material" encompasses a mixture of different graphene material as defined above.

"Carbon nanotubes" are on their side cylindrical nano structures, wherein the walls are formed by one-atom-thick sheet of carbon and wherein the graphene layers are rolled at specific and discrete angles, giving for example single-walled nanotubes (SWNTs) and concentric tubes or multi-walled nanotubes (MWNTs).

"Expanded graphite" is a multilayer made by partial exfoliation (thermal, chemical, or mechanical) of graphite into thin multilayer packets that retain the 3D crystal stacking of graphite. This is an operational definition based on the fabrication process. More precisely, expanded graphite means a graphite structure obtained for example by acidic treatment, in particular using $H_2SO_4$ or $HNO_3$ followed by a flash treatment in inert atmosphere, giving multi-layer graphene, typically exceeding 10 layers.

With respect to NGPs, products are commercially available, for example from Angstron Materials LLC, other suppliers offering part of the range. A broad array of NGPs with tailored sizes and properties can be produced by a combination of thermal, chemical and mechanical treatments. NGPs are not obtainable as single layer NGPs only; single layer NGPs and multi-layer NGPs are always produced as a mixture.

With respect to graphene oxide, it may be produced according to known methods, and for example according to the Hummers method applied to expanded graphite as illustrated in the examples.

Reduced graphene oxide, TRGO and CRGO may also be produced according to known methods. With respect

to CRGO, as described above, its preparation may occur *in situ.*

The graphene material may be selected among said previously listed graphene types and is preferably rGO and in particular CRGO.

The specific surface area (SSA) of graphene material can vary over a wide range, but is generally higher than the specific surface area of standard graphite when measured under identical conditions. The specific surface area, as measured by the BET method (as described below), preferably exceeds 30 $m^2/g$, more preferably 100 $m^2/g$ and, and more preferably 300 $m^2/g$.

Graphene material having high specific surface areas, preferably exceeding about 100 $m^2/g$ provide often beneficial effects in young modulus and barrier properties when used to produce nanocomposites in accordance with the instant invention.

The BET measurement can be carried out as follows:

The BET specific surface area is determined by gas adsorption on the ASAP2020 equipment from Micromeritics. Prior to the analysis, the graphene material is filled in a specific glass tube of 10$cm^3$. Around 75% of the total volume of the tube is filled; this means that depending of the material density, the total mass of the sample can vary a lot, typically from 50 to 300 mg. The graphene material is then pretreated under vacuum (A) standardly at 110°C or (B) at 40-50°C in the case of oxidized graphene material, until a stable vacuum of 4 μbar has been reached. This step can last several hours. This second heating procedure (B) is applied to decrease at maximum the risk of reduction of the material, resulting in a mass loss and an artificially increase of the SSA.

The measurements are performed using nitrogen as adsorptive gas at 77K by volumetric method, according to the ISO 9277: 2010 (Determination of the specific surface area of solids by gas adsorption - BET method) standard.

The BET specific surface area is calculated, in the standard case (A) in a relative pressure ($P/P_0$) range from 0.05 to 0.2 or (B) in a relative pressure ($P/P_0$) range chosen so that the BET C constant is positive according to the annex C of the ISO 9277: 210 standard. The method described in this annex requires drawing the graph of $na(1-P/P_0)$ vs $P/P_0$ (with na the specific adsorbed quantity and $P/P_0$ the relative pressure).

The application of the BET equation should be limited to the pressure range where the quantity $na(1-P/P_0)$ continuously increases with $P/P_0$. The maximum $P/P_0$ value is thus the relative pressure for which the quantity $na(1-P/P_0)$ is maximum. At least five points equal and lower than the maximum $P/P_0$ value are chosen to apply the BET theory.

Furthermore, the graphene material according to the present invention may present different degrees of polarity, generally characterized by the oxygen content of the graphene surface.

The oxygen content of graphene material can cover a broad range and may, depending on the process of manufacture or the treatment conditions, range from as low as less than 0.1 wt% to as high as 40 wt%. In some cases products with higher oxygen content in the range of from 2 to 40 wt%, in particular from 5 to 10wt%, have shown good results whereas in other cases products with low oxygen content of below 1%, preferably below or equal to 0.5% have been advantageous.

All structural parameters discussed hereinbefore and below refer to the graphene materials as such, i.e. these properties are determined prior to the incorporation of the graphene material into the monomer material. As is well known to the man skilled in the art, during compounding according to the usual methods, properties like aspect ratio or thickness, or surface functionalities may change so that the respective values of the parameters mentioned in the monomer material or in the final nanocomposite might be different from what has been described above.

## MASTERBATCH / OPTIONAL DILUTION STAGE

According to a particular embodiment, the present invention further relates to a process for producing a Masterbatch.

As used herein the term "Masterbatch" means a nanocomposite filled with a high or even very high amount of particles. This concentrated or even highly concentrated nanocomposite may be easily incorporated/diluted into a compatible polymer matrix by any means known to the man skilled in the art.

Masterbatch obtainable by the process according to the present invention form part of the present invention.

Highly concentrated Masterbatch (MB) are produced according to the *in situ* polymerization as described above. The graphene material concentration of said Masterbatch may more particularly be present in a minimum 3wt%, preferably ranges from 3 to 5wt%, or more preferably from 5 to 10wt%, and for example from 10 to 20wt%, relative to the total weight of the nanocomposite.

The maximum limit is governed by the possibility to introduce the filler in the reactor in terms of available volume; indeed, as the exfoliation rate of the graphene material generally increases, the graphene material density decreases.

According to another embodiment, the obtained nanocomposite Masterbatch is further diluted with a polymer matrix. This strategy presents the advantage that the final user may prepare all nanocomposite with respect to the filler amount by implementing a dilution stage. Said dilution stage may for example be performed *via* extrusion. Adding this dilution stage is moreover less time consuming than performing several *in situ* polymerization steps for the different

targeted concentrations.

Said two stages protocol, or process comprising an additional dilution stage, can enhance even better the dispersion, and consequently the properties of the nanocomposite.

According to one aspect of said embodiment, the polymer matrix comprises the same semi-aromatic polyamide or different nature polyamide, a mixture of semi-aromatic polyamide and aliphatic polyamide or a mixture of the same semi-aromatic polyamide and a polymer of different nature, such as a polyolefin.

The Masterbatch may be diluted with pure polymer matrix, of same semi-aromatic polyamide (SAP) or different nature polyamide, which may be an aliphatic polyamide (PA) or a mixture of semi-aromatic polyamide and polyamide (SAP+PA), to reach a reduced graphene material loading in the final sample. The nature of the polymer matrix is as described hereinafter. This dilution may occur in the melt using industrial equipment like an extruder or an internal mixer.

According to a preferred embodiment, an extruder is used.

The mixing parameters are fixed according to the general knowledge of the man skilled in the art.

It is also possible to add another filler during the dilution stage, said additional filler, like plasticizer and compatibilizer.

Semi Aromatic Polyamide (SAP)

The nanocomposite according to the present invention may be obtained by diluting a Masterbatch into all the types of semi-aromatic polyamides as described above, such as SA-PA1 and SA-PA2.

Particularly beneficial results are obtained when diluting nanocomposites based on semi-aromatic polyamide (SA-PA1) as obtained according to the invention with MXD6 polymers (as hereabove defined) or MXD10 polymers (as hereinabove defined).

MXD6 polymers and other semi-aromatic polyamides are commercially available notably from Mitsubishi Gas Chemicals. Polymer materials comprising MXD6 and a second polyamide (e.g. of the type as hereinafter referred to as PA3) are notably commercially available as IXEF® polyamides from Solvay Advanced Polymers, L.L.C.

MXD10 polymers are a second group of preferred semi-aromatic polyamides in the nanocomposite in accordance with the instant invention.

Suitable polyphthalamides are available as AMODEL® polyphthalamides from Solvay Advanced Polymers, L.L.C.

Polyamide (PA)

The nanocomposite according to the present invention may be obtained by diluting a Masterbatch into aliphatic polyamide(s).

For the purpose of the present invention, the definition "aliphatic polyamide" is intended to denote any polyamide more than 50 mole %, preferably more than 75 mole % and more preferably more than 85 mole % of the recurring units of which are obtainable by (and preferably, obtained by) the polycondensation reaction between at least one aliphatic diacid (and/or a derivative thereof) and at least one aliphatic diamine, and/or by the auto-polycondensation reaction of an amino carboxylic acid and/or a lactam. Aliphatic diacids and aliphatic diamines are those above described as suitable for polymers (SA-PA1) and (SA-PA2).

Preferably, the majority or all the recurring units of the aliphatic polyamide (PA) are obtainable by (and preferably, obtained by) the polycondensation reaction between at least one aliphatic diacid or derivative thereof and at least one aliphatic diamine.

More preferably, the aliphatic polyamide (PA) is chosen from poly(hexamethylene adipamide) (nylon 66), poly(hexamethylene azelaamide) (nylon 69), poly(hexamethylene sebacamide) (nylon 610), poly(hexamethylene dodecanoamide) (nylon 612), poly(dodecamethylene dodecanoamide) (nylon 1212), poly(11-amino-undecano-amide) (nylon 11) and their copolymers or mixtures thereof Examples of polyamides obtainable by (and preferably, obtained by) the auto-polycondensation reaction of an amino carboxylic acid and/or a lactam are the polycaprolactam (nylon 6), and the poly(11-amino-undecano-amide). Cycloaliphatic polyamides obtainable from cyclic monomers as mentioned hereinbefore as suitable monomers for the semi-aromatic polyamides may also be mentioned.

More preferably, the aliphatic polyamide (PA) is chosen from nylon 6 and nylon 66.

Still more preferably, the aliphatic polyamide (PA) is nylon 66, i.e. the polyamide obtainable by (and preferably, obtained by) the polycondensation reaction between 1,6-hexamethylenediamine and adipic acid.

Other polymer matrix

The nanocomposite according to the present invention may be obtained by dilution of a Masterbatch into a polymer matrix comprising polyolefins. As an example a polymer matrix may be cited, comprising a semi-aromatic

polyamide, for example amounting from 70 to 90, for example 80% by weight with respect to the total weight of the final polymer matrix, and further comprising polyolefins, for example amounting from 10 to 30% by weight, for example 20% by weight, with respect to the total weight of the final polymer matrix.

"Final polymer matrix" means the polymer matrix enriched with the filler *via* the dilution of the Masterbatch. Polyolefins may be advantageously present in the polymeric matrix for improving the impact resistance of the nanocomposite while the graphene material is present for improving the barrier properties. A typical application for this kind of nanocomposite is fuel tank application.

## APPLICATIONS

The nanocomposites and Masterbatch according to the present invention may be used for preparing fuel barrier material, in particular for automotive application. They may in particular be useful for the manufacture of fuel tanks and pipes.

They may also be used for preparing thermally conductive, antistatic and barrier polymer material for solid parts or polymer coatings on substrates.

The expressions "between ... and ..." and "ranging from ... to ..." should be understood as meaning limits included, unless otherwise specified.

The examples that follow illustrate the present invention without limiting the scope thereof

"wt%" means % by weight.

## EXAMPLE:

1. Graphene material

| Nature of the graphene material | SSA (BET) in $m^2/g$ | Oxygen content in wt% |
|---|---|---|
| Expanded graphite sold under the name TIMREX BNB90 by company TIMCAL | 24* | <0.2 |
| Graphene oxide (GO) | 23** | 36 |
| Thermally reduced graphene oxide (TRGO) | | 9 |
| * measured by protocol A as described above<br>** measured by protocol A as described above | | |

2. Polymer (and monomers)

**[0159]** - MXD6: Para0000 (monomers: adipic acid and meta-xylylene diamine)

3. TRGO-MXD6 composite preparation

3.1. Preparation of the graphene oxide

The graphene oxide used in the next stages is produced following a modified Hummers method described as follow: 5mg of expanded graphite (TIMREX BNB90) is added slowly to 350ml of $H_2SO_4$ precooled at 0°C. Then 50 mg $KMNO_4$ and 7.5 mg $NaNO_3$ were added gradually with stirring. The temperature of the mixture was always kept below 10°C. The mixture was stirred during 30 min. Subsequently, 660 ml demi-water is slowly added by dropping funnel; consequently, the temperature increased to reach approximately 100°C. The mixture is stirred for 30 min. The reaction is terminated by adding 1000 ml demi-water followed by 66.6 ml of $H_2O_2$ (30%). The yellow brown color of the mixture indicates that the oxidation of graphite occurred correctly. Next, the mixture is diluted with $H_2O$ and rested overnight so that the mother liquor decants. After removing the liquid phase, the GO is washed two times with 10% HCl (2x11). After, the GO is washed by a succession of agitation in demi-water and centrifugation (10000rpm, 30min) steps until pH-7 of the washing water after centrifugation is reached. Finally, the particles are recovered after freeze-drying.

3.2. Production of a Masterbatch

Said stage may be divided in four steps:

- STEP 1: 0.7g of graphite oxide (GO) is introduced in a 50ml autoclave reactor (classic closure type) at room temperature. The remained air is flushed with $N_2$ in order to have an inert atmosphere in the reactor.
- STEP 2: the $N_2$ is switched off before heating the GO to 240°C in order to avoid any loss of graphitic material during expansion at around 200°C. The GO is heated during 3h in order to produce thermally reduced graphene (TRGO). The duration of 3 hours allows reaching an oxygen content of 9wt%, measured by XPS.
- STEP 3: The reactor is opened at 240°C and the adipic acid (16.1g) is added and meta-xylylene diamine (14.5ml) monomers (purchased from Aldrich with CAS numbers respectively 124-04-9 and 1477-55-0) in the form of Nylon salt is also added. When the Nylon salt is melted, the reactor is closed.
- STEP 4: the polycondensation of the Nylon salt occurs in presence of the TRGO in the autoclave reactor, under nitrogen flow (0.5bar) and mechanical stirring (200rpm) with different steps of temperature. The polymerization starts at 240°C during 2h before increasing the temperature at 250°C for 1h. Then the pressure is decreased to -1bar during 30min to maximize the monomer conversion into polymer. Finally, the melt polymer containing 5wt% of TRGO is recovered using a spatula. This amount is expressed in weight ratio TRGO/polymer.

3.3. Dilution of the Masterbatch

Said Stage consists of diluting the Masterbatch obtained above at point 3.2. with pure commercial MXD6 (PAra0000 from Solvay) polymer matrix to reach 2wt% of TRGO in the final sample. This filler content is obtained by mixing 7.5g of MB with 7.5g of MXD6 in a lab scale twin-screw extruder (XPlore MC15 from DSM) operated in recycle mode with the following conditions: under nitrogen flow, at 260°C and screws rotation speed of 250rpm and a residence time of 5min.

4. Specimens preparation and characterization

4.1. Tensile tests

The composite samples are molded by injection for the tensile tests using a DSM mini injection machine. The polymeric sample is melted in the oven at 260°C for 5min and then injected with a pressure of 10 bar in a mold at 40°C. Some dogbone like samples are used following the ASTM D638 norm.

The tensile tests are performed using a Zwickline (model Z2.5) machine at room temperature and a tensile speed of 2.5mm/min. The tangent modulus is measured between 0.005 and 1% of deformation.

The Figure 1 shows that the Young modulus of two samples obtained by *in situ* polymerization in presence of GO (3730 MPa) or TRGO (3630MPa) are very similar. But in both cases there is an increase compared to the extruded commercial MXD6 polymer matrix (2434 MPa).

4.2. Transversal resistivity

The transversal resistivity measurements are performed on compression-molded disks using a Carver hot press. The samples are first melted during 5min30s and pressed at 10bars during 3min. The mould is then directly cool down to room 20°C at 10 bars using another Carver press cooled by water flow. The specimens are 10 cm in diameter and 750$\mu$m thick. The resistivity is measured in order to evaluate the graphene material dispersion within the polymeric matrix. Indeed, at the same loading, if the filler dispersion quality increases, the electrical conductivity is also improved. We used a two probes test in an isolate box in order to measure some low conductive materials. The apparatus used is a two-probe test method, where an electrometer Keithley (Model 8009 test fixture) is able to measure volume resistivity of insulating materials up to $10^{18}$ Ohm cm.

The MXD6 polycondensation in presence of TRGO gives a value of 3 $10^9$ Ohm. cm.

4.3. Study of the impact of the filler content on mechanical properties

The present study is performed to evaluate the influence of the filler content on the materials properties by testing various dilution rates of the Masterbatch.

Figure 2 represents the results of Young Modulus for samples obtained according to the invention process, with a various final TRGO loadings, varying from 0.5wt% to 4wt%.

Figure 2 shows an increase of the Young's modulus with the TRGO content, which corresponds to an increase of the material strength due to the addition of the graphene filler. The sample loaded with 2wt% shows a higher Young's modulus likely due to the fact that the percolation threshold is reached.

4.4. Study of the filler content on resistivity measure

The present study is performed by measurement of the transversal resistivity in order to evaluate the graphene material dispersion quality and the TRGO reduction extend.

Figure 3 represents the results of resistivity for samples obtained according to the invention process, with a various final TRGO loadings, varying from 0.5wt% to 4wt%.

On the figure 3, a decrease of the resistivity with the TRGO content increase can be observed. A 5 decades decrease can be noticed from the 0.5wt% to the 4wt% sample. The maximum of conductivity seems to be reached at 2wt% which is also supposed to be close to the electrical percolation threshold. This percolation threshold is also confirmed by rheology with the apparition of a plateau on the G' curve at low frequencies.

## Claims

**1.** Process for manufacturing a nanocomposite comprising at least one semi-aromatic polyamide and at least one graphene material, said process comprising at least the steps consisting in:

(i) having in a reactor said graphene material and a monomer material suitable for the preparation of said semi-aromatic polyamide, and
(ii) polymerizing said monomer material in said reactor to yield said nanocomposite.

**2.** Process according to the preceding claim, wherein the graphene material is chosen among graphene, nano-graphene platelets (NGP), graphene oxide (GO), reduced graphene oxide (RGO) *via* thermal reduction (TRGO) or chemical reduction (CRGO).

**3.** Process according to claim 1 or 2, wherein the graphene material presents a specific surface area exceeding 30 $m^2/g$, preferably 100 $m^2/g$ and, and more preferably 300 $m^2/g$.

**4.** Process according to anyone of the preceding claims, wherein the graphene material is thermally reduced graphene oxide (TRGO).

**5.** Process according to anyone of the preceding claims, wherein the reactor further comprises a solvent of the monomer material, wherein said solvent and said monomer material form a solution, and wherein said graphene material is dispersed in said solution, or alternatively wherein the reactor is free of any solvent of the monomer material and wherein the graphene material is dispersed in said monomer material.

**6.** Process according to anyone of the preceding claims, wherein the polymerization is a melt polymerization and is in particular performed under inert gas, more particularly under stirring and under heating and optionally under pressure or wherein the polymerization is a solution polymerization.

**7.** Process according to anyone of the preceding claims, wherein the polymerization is a polycondensation reaction between at least one aromatic diamine and at least one aliphatic diacid or derivatives thereof

**8.** Process according to the preceding claim, wherein the aromatic diamine is selected from a $C_6$-$C_{24}$-aromatic diamine, more preferably a $C_6$-$C_{18}$-aromatic diamine and more preferably a $C_6$-$C_{10}$-diamine and the aliphatic diacid is selected form a $C_2$-$C_{16}$ aliphatic diacid.

**9.** Process according to the preceding claim, wherein the aromatic diamine is m-xylylene diamine and the non-aromatic diacid is adipic acid.

**10.** Process according to anyone of claims 1 to 6, wherein the polymerization is a polycondensation reaction between at least one aromatic diacid or derivatives thereof and at least one aliphatic diamine.

**11.** Process according to anyone of the preceding claims, wherein the graphene material is present in the nanocomposite

in an amount ranging from 0.01 to 20%, in particular from 0.01 to 10%, and more particularly from 0.5 to 5% by weight, with respect to the total weight of the nanocomposite.

**12.** Process according to anyone of the preceding claims, wherein the obtained nanocomposite is further diluted with a polymer matrix, in particular using extrusion.

**13.** Process according to the preceding claim, wherein the polymer matrix comprises the same semi-aromatic polyamide or different nature polyamide, a mixture of semi-aromatic polyamide and aliphatic polyamide or a mixture of the same semi-aromatic polyamide and a polymer of different nature, such as a polyolefin.

**14.** Nanocomposite obtainable by the process according to anyone of the preceding claims (in particular, nanocomposite obtainable by the process according to anyone of the preceding claims wherein the graphene material is a thermally reduced graphene oxide), wherein the graphene material is present in the nanocomposite in an amount of less than 3% by weight, in particular of less than 2.5% by weight and more particularly equal or less than 2% by weight, with respect to the total weigh of the nanocomposite, and wherein the nanocomposite has a Young modulus, as measured according ASTM D638, which is at least 5% greater, and more generally around 10% greater, than a reference nanocomposite obtained by extruding the semi-aromatic polyamide and the graphene material.

**15.** Masterbatch obtainable by the process according to anyone of claims 1 to 11, wherein the graphene material is present in the nanocomposite in an amount above 3% by weight, in particular ranging from 3 to 5% by weight, in particular from 5 to 10% by weight, for example from 10 to 20% by weight, with respect to the total weight of the Masterbatch.

**Figure 1**

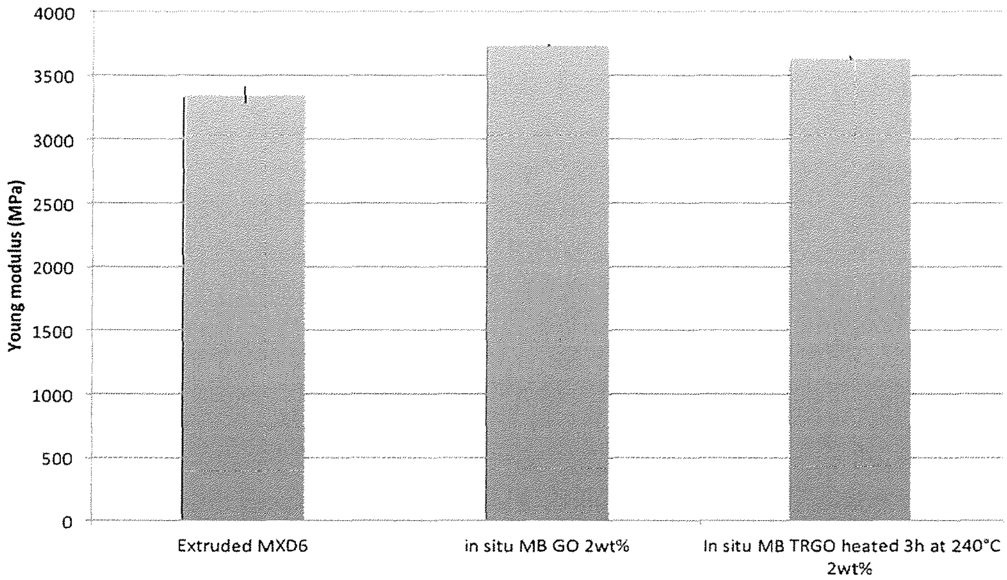
4000
3500
3000
2500
2000
1500
1000
500
0
Young modulus (MPa)
Extruded MXD6
in situ MB GO 2wt%
In situ MB TRGO heated 3h at 240°C 2wt%

Figure 2

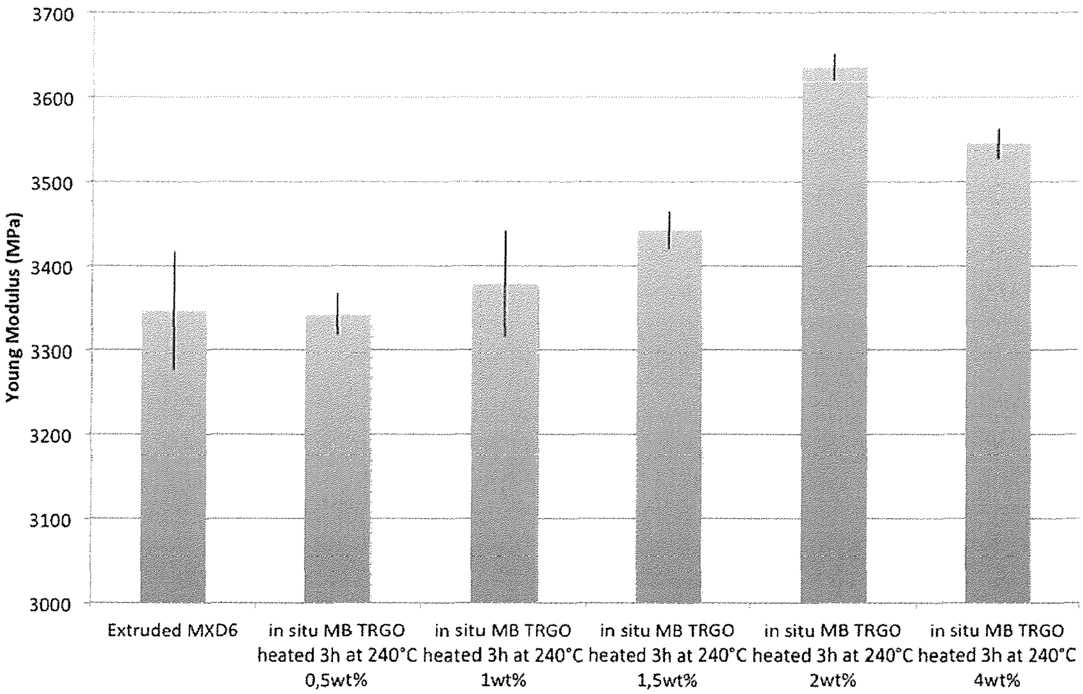
3700
3600
3500
3400
3300
3200
3100
3000
Young Modulus (MPa)
Extruded MXD6
in situ MB TRGO heated 3h at 240°C 0,5wt%
in situ MB TRGO heated 3h at 240°C 1wt%
in situ MB TRGO heated 3h at 240°C 1,5wt%
in situ MB TRGO heated 3h at 240°C 2wt%
in situ MB TRGO heated 3h at 240°C 4wt%

Figure 3

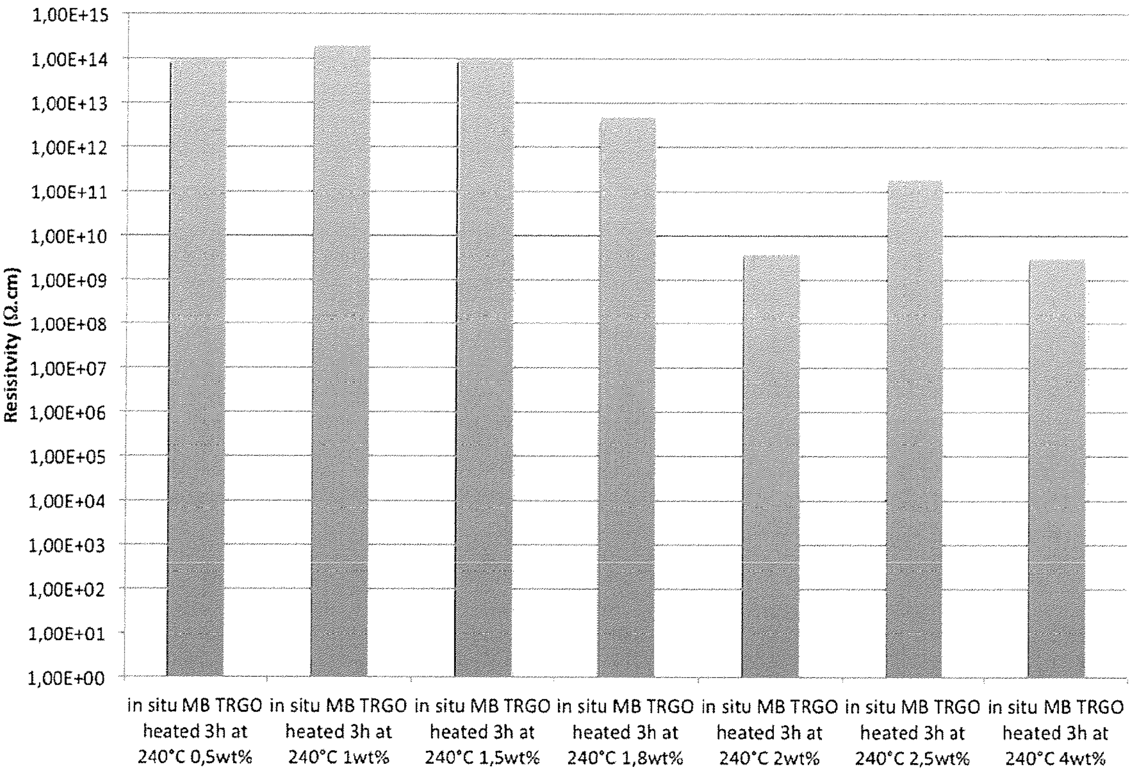
1,00E+15
1,00E+14
1,00E+13
1,00E+12
1,00E+11
1,00E+10
1,00E+09
1,00E+08
1,00E+07
1,00E+06
1,00E+05
1,00E+04
1,00E+03
1,00E+02
1,00E+01
1,00E+00
Resisitvity (Ω.cm)
in situ MB TRGO heated 3h at 240°C 0,5wt%
in situ MB TRGO heated 3h at 240°C 1wt%
in situ MB TRGO heated 3h at 240°C 1,5wt%
in situ MB TRGO heated 3h at 240°C 1,8wt%
in situ MB TRGO heated 3h at 240°C 2wt%
in situ MB TRGO heated 3h at 240°C 2,5wt%
in situ MB TRGO heated 3h at 240°C 4wt%

Europäisches Patentamt
European Patent Office
Office européen des brevets

# EUROPEAN SEARCH REPORT

Application Number
EP 14 17 3533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2011/117325 A2 (SOLVAY [BE]; MILTNER HANS EDOUARD [BE]; LEO VITO [BE]; KWAN KERMIT S [) 29 September 2011 (2011-09-29)<br>* page 36; claim 1 *<br>* page 27; example 1 *<br>* page 12, line 9 - line 26 *<br>* page 2, line 15 - line 22 *<br>----- | 1-15 | INV.<br>C08K3/00<br>C08K3/04<br>C08L77/06<br>C08L77/10<br>C08F2/44<br>C01B31/02<br>C01B31/04 |
| Y | CHANG IL KIM ET AL: "Graphenes for low percolation threshold in electroconductive nylon 6 composites",<br>POLYMER INTERNATIONAL,<br>vol. 63, no. 6,<br>12 September 2013 (2013-09-12), pages 1003-1010, XP055150045,<br>ISSN: 0959-8103, DOI: 10.1002/pi.4601<br>* abstract *<br>* Paragraph: Preparation of graphenes and composites;<br>page 1004; table 2 *<br>* left column;<br>page 1009; table 6 *<br>----- | 1-15 | |
| | | | TECHNICAL FIELDS SEARCHED (IPC) |
| A | VIRENDRA SINGH ET AL: "Graphene based materials: Past, present and future",<br>PROGRESS IN MATERIALS SCIENCE, PERGAMON PRESS, GB,<br>vol. 56, no. 8, 30 March 2011 (2011-03-30), pages 1178-1271, XP028375493,<br>ISSN: 0079-6425, DOI:<br>10.1016/J.PMATSCI.2011.03.003<br>[retrieved on 2011-04-03]<br>* page 1232, paragraph 6 - page 1236 *<br>----- | 1-15 | C01B<br>C08F<br>C08K<br>C08G<br>C08L |

The present search report has been drawn up for all claims

3

| Place of search | Date of completion of the search | Examiner |
|---|---|---|
| Munich | 13 November 2014 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 14 17 3533

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2014

| Patent document cited in search report | Publication date | Patent family member(s) | Publication date |
|---|---|---|---|
| WO 2011117325 A2 | 29-09-2011 | EP 2550332 A2 | 30-01-2013 |
| | | US 2013072613 A1 | 21-03-2013 |
| | | WO 2011117325 A2 | 29-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011117325 A


### Non-patent literature cited in the description


- **DAN ZHENG et al.** In situ thermal reduction of graphene oxide for high electrical conductivity and low percolation threshold in polyamide 6 nanocomposites. *Composites Science and Technology,* 2012, vol. 72, 284-289
- **XIAOQING ZHANG et al.** Facile preparation route for graphene oxide reinforced polyamide 6 composites via in situ anionic ring-opening polymerization. *J. Mater. Chem.,* 2012, vol. 22, 24081
- **BOEHM et al.** *Pure an Appl. Chemistry,* 1994, vol. 66, 1893-1901
- *Nature,* 2009, 367
- **M. CHOUCAIR et al.** *Nature Nanotechnology,* 2009, vol. 4, 30-33
- **BECERRIL et al.** Evaluation of solution processed reduced graphene oxide films as transparent conductors. *ACS Nano,* 2008, vol. 2 (3), 463-470